# EUROPÄISCHE PATENTSCHRIFT

(11) **EP 1 369 633 B1**
(45) Veröffentlichungstag und Bekanntmachung des Hinweises auf die Patenterteilung: **12.07.2006**
(21) Anmeldenummer: 02012669.4
(22) Anmeldetag: 07.06.2002
(51) Int. Cl.: F16L 27/093, F16L 41/00

(54) **Anschlussvorrichtung für Fluidleitungen**
Connecting device for fluid conduits
Dispositif de connexion pour des conduits de fluide

(43) Veröffentlichungstag der Anmeldung: 10.12.2003
(73) Patentinhaber: FESTO AG & Co, 73734 Esslingen (DE)
(72) Erfinder: Christiani, Peter, Dr., 72639 Neuffen (DE); Rogalski, Markus, 70794 Filderstadt (DE); Maninger, Rolf, 71364 Winnenden (DE)
(74) Vertreter: Abel, Martin

(56) Entgegenhaltungen:
- EP-A- 0 520 212
- DE-A- 3 739 981
- FR-A- 2 352 188
- GB-A- 878 480
- US-A- 4 142 741
- US-A- 4 690 035
- US-A- 6 056 325
- US-B1- 6 202 785

## Beschreibung

Die vorliegende Erfindung betrifft eine Anschlussvorrichtung für Fluidleitungen, mit einer Basiseinheit, die ein längliches Befestigungsteil mit einander entgegengesetzten ersten und zweiten Endbereichen aufweist, auf das ein Schwenkteil drehbar aufgesteckt ist, das einen Speiseanschluss aufweist, der zum Anschließen einer ein Druckmedium einspeisenden Fluidleitung vorgesehen ist, und mit einem am ersten Endbereich des Befestigungsteils vorgesehenen Arbeitsanschluss zum Verbinden mit einer fluidtechnischen Komponente und einem am zweiten Endbereich des Befestigungsteils vorgesehenen, eine erste Schnittstelle aufweisenden Entlüftungsanschluss, wobei das Schwenkteil mit einem in die Verbindung zwischen den drei Anschlüssen eingeschalteten Schnellentlüftungsventil ausgestattet ist.

Eine aus der EP-A-0520212 bekannte Anschlussvorrichtung für Fluidleitungen enthält ein längliches, nach Art einer Hohlschraube ausgebildetes Befestigungsteil, das an einem ersten Endbereich einen Arbeitsanschluss aufweist, der in die zugeordnete fluidtechnische Komponente eingeschraubt werden kann. Ein auf das Befestigungsteil drehbar aufgestecktes Schwenkteil enthält einen Speiseanschluss, an dem eine Fluidleitung festlegbar ist, die Druckluft heranführt. Ein zweiter Endbereich des Befestigungsteils repräsentiert einen Entlüftungsanschluss, in dem ein Nadelventil montiert ist. Die aus der fluidtechnischen Komponente zurückströmende Druckluft wird über seitlich am Befestigungsteil vorgesehene Abluftöffnungen zur Umgebung abgeführt. Das Befestigungsteil ist mit einem Rückschlagventil ausgestattet, das dafür sorgt, dass die von der fluidtechnischen Komponente zurückströmende Druckluft nur über das als Abluftdrossel fungierende Nadelventil hinweg ausströmen kann.

Die bekannte Anschlussvorrichtung hat einen an den geschilderten Verwendungszweck speziell angepassten Aufbau. Dies führt dazu, dass für andere Anwendungsfälle andere Bauarten von Anschlussvorrichtungen benötigt werden. So verwendet man in Fällen, bei denen keine Abluftdrosselung erforderlich ist, Anschlussvorrichtungen der beispielsweise in der DE 94 15 871 U1 beschriebenen Bauart, die ein von einer Hohlschraube gebildetes Befestigungsteil aufweisen, das keine Abluftdrossel enthält und somit einen freien Fluidurchgang gewährleistet. Wie im Falle der DE 200 08 129 U verfügt die Anschlussvorrichtung gemäß DE 94 15 871 U1 auch nur über zwei Anschlüsse für die Zufuhr und Abfuhr des Druckmediums. Dadurch sind zusätzlich aufwendige Steuerventile erforderlich, wenn das Druckmedium in zwei Richtungen durch die Anschlussvorrichtung hindruchgeleitet werden soll.

Im Falle der FR-A-2 352 188 befindet sich der Entlüftungsanschluss gemeinsam mit dem Speiseanschluss am Schwenkteil. Für Anwendungen mit und ohne Abluftdrosselung werden unterschiedliche Bauarten des Schwenkteils eingesetzt.

Es ist die Aufgabe der vorliegenden Erfindung, eine Anschlussvorrichtung für Fluidleitungen zu schaffen, deren Aufbau eine Verwendung für unterschiedliche Anwendungsfälle ermöglicht..

Gelöst wird diese Aufgabe dadurch, dass die Anschlussvorrichtung zusätzlich zu dem Befestigungsteil mehrere jeweils von einem zur Luftabfuhr dienenden Entlüftungskanal durchsetzte unterschiedliche Typen von Entlüftungseinheiten aufweist, unter denen sich wenigstens eine Entlüftungseinheit mit Abluftdrossel und wenigstens eine Entlüftungseinheit ohne Abluftdrossel befindet und die zur wahlweisen Befestigung an der ersten Schnittstelle des Entlüftungsanschlusses jeweils mit einer zu der ersten Schnittstelle komplementären zweiten Schnittstelle versehen sind.

Die am Entlüftungsanschluss des Befestigungsteiles vorgesehene Schnittstelle ermöglicht es, dem jeweiligen Anwendungszweck entsprechend unterschiedliche Arten von Entlüftungseinheiten zu installieren. Auf diese Weise lassen sich unterschiedliche Bauformen der Anschlussvorrichtung unter Verwendung einer großen Anzahl von Gleichteilen realisieren. In Verbindung mit dem am Schwenkteil vorgesehenen Schnellentlüftungsventil kann zudem die vom Arbeitsanschluss zurückströmende Druckluft über die von Fall zu Fall vorgesehene spezielle Entlüftungseinheit gesondert und ohne Verwendung des Speiseanschlusses abgeführt werden. Die ermöglicht die Realisierung von Entlüftungsquerschnitten, die nicht an den Querschnitt der am Speiseanschluss angeschlossenen Fluidleitung gebunden sind, so dass eine sehr schnelle Entlüftung stattfinden kann.

Vorteilhafte Weiterbildungen der Erfindung gehen aus den Unteransprüchen hervor.

Bei der dem Entlüftungsanschluss zugeordneten ersten Schnittstelle handelt es sich zweckmäßigerweise um eine Schraub-Schnittstelle, an der sich die für den Einsatzzweck gewünschte Entlüftungseinheit sehr einfach im Rahmen eines Schraubvorganges fixieren lässt.

Wenn die erste Schnittstelle zur lösbaren Befestigung der Entlüftungseinheiten ausgebildet ist, kann ein- und dieselbe Basiseinheit sehr einfach nachträglich für unterschiedliche Anwendungszwecke umgerüstet werden.

Mindestens eine der Entlüftungseinheiten enthält zweckmäßigerweise einen Schalldämpfer zur Dämpfung des Schalls der austretenden Luft. Ein solcher Schalldämpfer kann sowohl bei einer mit einer Abluftdrossel ausgestatteten Entlüftungseinheit als auch bei einer keine Abluftdrossel enthaltenden Entlüftungseinheit vorteilhaft verwendet werden.

Um am Einsatzort der Anschlussvorrichtung ein durch ausströmende Druckluft erzeugtes Geräusch zu verhindern, kann die Anschlussvorrichtung an der am Befestigungsteil vorgesehenen ersten Schnittstelle mit einer Entlüftungseinheit bestückt werden, die einen Fluidleitungsanschluss aufweist, an dem sich eine zur gefassten Luftabfuhr dienende Fluidleitung anschließen lässt. Der Fluidleitungsanschluss ist zweckmäßigerweise mit Steckanschlussmitteln ausgestattet, die eine lösbare Steckverbindung der Fluidleitung ermöglichen.

Um eine bedarfsgemäße Positionierung der von der Entlüftungseinheit abgehenden Fluidleitung zu ermöglichen, ist die zur gefassten Luftabfuhr dienende Entlüftungseinheit zweckmäßigerweise mit einer zur Verbindung mit dem Befestigungsteil vorgesehenen Hohlschraube und einem drehbar auf die Hohlschraube aufgesteckten Schwenkteil ausgestattet, wobei das Schwenkteil den Fluidanschluss aufweist.

Von Fall zu Fall kann der Speiseanschluss für den Anschluss der zugeordneten Fluidleitung mit Steckanschlussmitteln oder mit Schraubanschlussmitteln ausgestattet sein.

Auf jeden Fall ist es vorteilhaft, wenn das Schwenkteil zur drehbaren Lagerung am Befestigungsteil über einen Schwenkteil-Grundkörper verfügt, an dem ein den Speiseanschluss aufweisender Speiseanschlusskörper befestigt ist. In diesem Zusammenhang besteht die Möglichkeit, unterschiedliche Typen von Speiseanschlusskörpern bereitzustellen, die in Abhängigkeit vom Anwendungsfall wahlweise am Schwenkteil-Grundkörper festlegbar sind. Es lassen sich dadurch nicht nur verschiedene Bauarten der Anschlussmittel, sondern auch verschiedene Anschlussgrößen variabel vorsehen.

Nachfolgend wird die Erfindung anhand der beiliegenden Zeichnung näher erläutert. In dieser zeigen:
- Figur 1: eine bevorzugte Bauform der erfindungsgemäßen Anschlussvorrichtung im Längsschnitt, wobei mehrere alternativ an der Basiseinheit der Anschlussvorrichtung festlegbare Entlüftungseinheiten schematisch strichpunktiert angedeutet sind,
- Figur 2: eine Draufsicht auf die Basiseinheit der Anschlussvorrichtung aus Figur 1,
- Figur 3: eine Längsschnittdarstellung der Anschlussvorrichtung aus Figur 1, ausgestattet mit einer einen Schalldämpfer und eine Abluftdrossel enthaltenden Entlüftungseinheit, wobei strichpunktiert ein Ausschnitt einer fluidtechnischen Komponente illustriert ist, an der die Anschlussvorrichtung festlegbar ist,
- Figur 4: in Längsschnittdarstellung die Anschlussvorrichtung aus Figur 1, ausgestattet mit einer Entlüftungseinheit ohne Abluftdrossel, jedoch mit Schalldämpfer, und
- Figur 5: eine Längsschnittdarstellung der Anschlussvorrichtung aus Figur 1, ausgestattet mit einer Entlüftungseinheit ohne Abluftdrossel und mit einem Fluidleitungsanschluss zur gefassten Luftabfuhr.

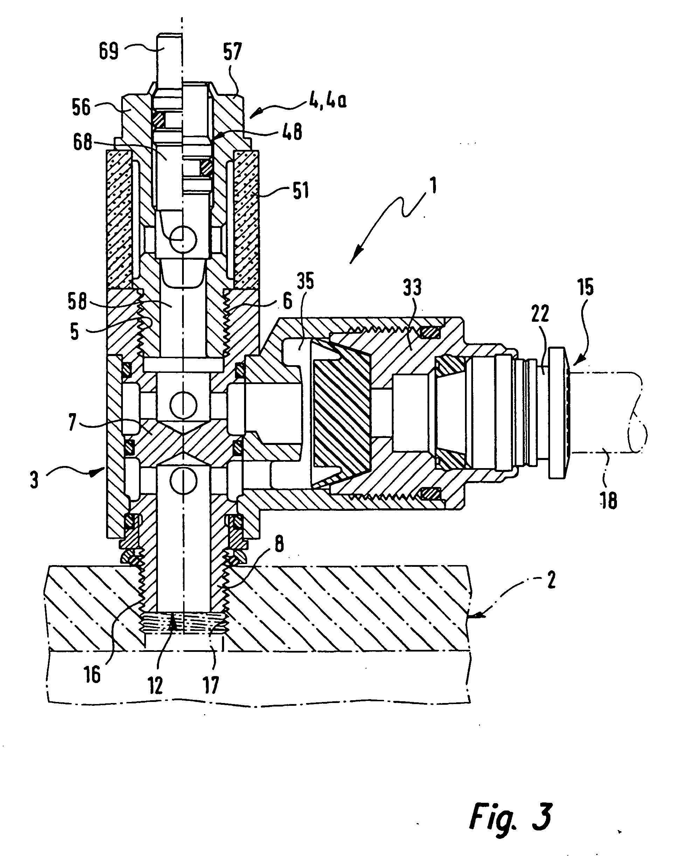

Die in ihrer Gesamtheit mit Bezugsziffer 1 bezeichnete Anschlussvorrichtung ist beim Ausführungsbeispiel vorgesehen, um bei der Zufuhr und Abfuhr von Druckluft in einen bzw. aus einem fluidbetätigten Antrieb mitzuwirken, der in Figur 3 partiell angedeutet und mit Bezugsziffer 2 versehen ist. Anstelle des fluidbetätigten Antriebes 2 kann aber auch jede beliebige andere fluidtechnische Komponente mit der Anschlussvorrichtung ausgestattet werden, beispielsweise ein Ventil oder ein Druckbehälter.

Die Anschlussvorrichtung 1 setzt sich im wesentlichen aus einer Basiseinheit 3 und einer Entlüftungseinheit 4 zusammen, wobei die Basiseinheit 3 eine erste Schnittstelle 5 aufweist, an der die Entlüftungseinheit 4 mit einer komplementären zweiten Schnittstelle 6 festlegbar ist.

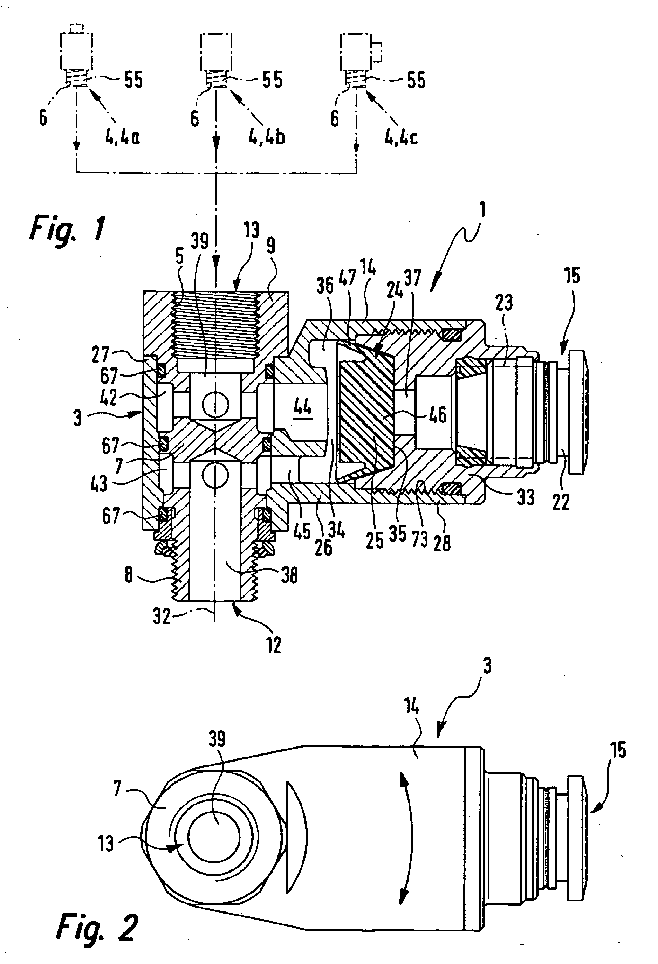

Durch die Realisierung der an der Basiseinheit 3 vorgesehenen ersten Schnittstelle 5 besteht die vorteilhafte Möglichkeit, wahlweise unterschiedliche Typen von Entlüftungseinheiten 4 an der Basiseinheit 3 zu montieren, in Abhängigkeit von den Gegebenheiten des jeweiligen Anwendungsfalles. In Figur 1 sind drei mögliche Entlüftungseinheiten angedeutet, die über voneinander abweichende fluidtechnische Ausstattungen verfügen und die zur besseren Unterscheidung ergänzend mit den Bezugsziffern 4a, 4b und 4c versehen sind.

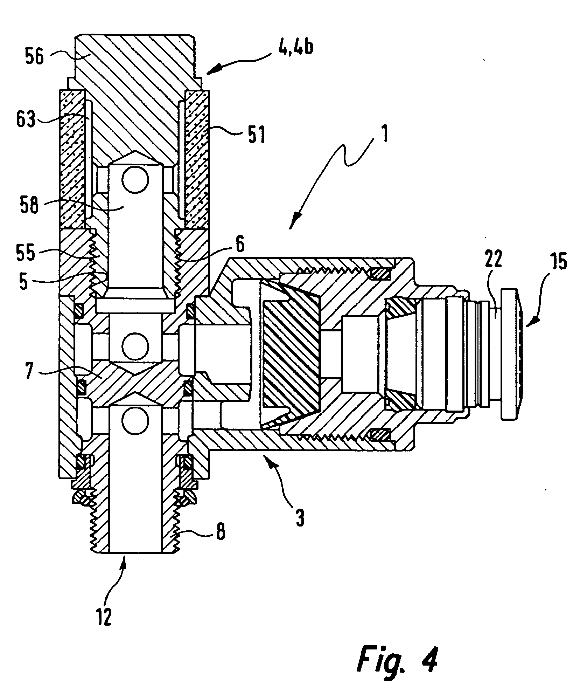

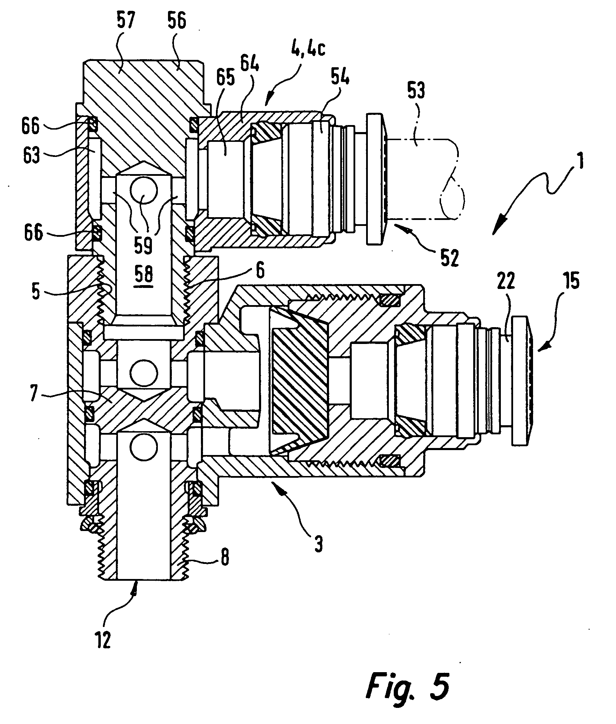

Die Figuren 3 bis 5 zeigen die Anschlussvorrichtung 1 in den unterschiedlichen Ausstattungsvarianten, wobei die Basiseinheit 3 in Figur 3 mit der ersten Entlüftungseinheit 4a, in Figur 4 mit der zweiten Entlüftungseinheit 4b und in Figur 5 mit der dritten Entlüftungseinheit 4c ausgestattet ist.

Die Basiseinheit 3 verfügt über ein längliches Befestigungsteil 7 mit einander entgegengesetzten ersten und zweiten Endbereichen 8, 9. Am ersten Endbereich 8 ist ein Arbeitsanschluss 12 vorgesehen, am zweiten Endbereich 9 ein Entlüftungsanschluss 13.

Auf das Befestigungsteil 7 ist ein Schwenkteil 14 drehbar aufgesteckt. An ihm ist ein seitwärts ragender Speiseanschluss 15 vorgesehen.

Die erste Schnittstelle 5 befindet sich an dem Entlüftungsanschluss 13 und ermöglicht das erwähnte wahlweise Anschließen der Entlüftungseinheiten 4, wobei gleichzeitig eine mechanische und eine fluidische Verbindung zwischen der Basiseinheit 3 und der betreffenden Entlüftungseinheit 4 hergestellt wird.

Der Arbeitsanschluss 2 dient zum Verbinden der Anschlussvorrichtung 1 mit der schon erwähnten fluidtechnischen Komponente 2. Beim Ausführungsbeispiel verfügt der Arbeitsanschluss 12 über ein Anschlussgewinde 16, mit dem er in ein komplementäres Befestigungsgewinde 17 des fluidtechnischen Bauteiles 2 unter Herstellung einer sowohl mechanischen als auch fluidischen Verbindung einschraubbar ist (Figur 3).

Der Speiseanschluss 15 ist zum Anschließen einer in Figur 3 strichpunktiert angedeuteten Fluidleitung 18 vorgesehen, über die das für den Betrieb der fluidtechnischen Komponente 2 erforderliche Druckmedium - hier: Druckluft - von einer Druckquelle zugeführt wird. Das Anschließen der Fluidleitung 18 kann durch eine einfache Steckverbindung geschehen, zu welchem Zweck der Speiseanschluss 15 mit geeigneten Steckanschlussmitteln 22 ausgestattet ist. Die eingesteckte Fluidleitung 18 wird unter Abdichtung festgehalten. Bei Bedarf kann die Fluidleitung 18 durch entsprechende Betätigung der Steckanschlussmittel 22 jederzeit wieder herausgezogen werden.

Alternativ kann der Speiseanschluss 15 für den Anschluss der Fluidleitung 18 auch Schraubanschlussmittel 23 aufweisen, wie sie in Figur 1 strichpunktiert angedeutet sind. Es handelt sich hier insbesondere um ein Innengewinde, in das sich eine mit einem Außengewinde versehen Fluidleitung unter Abdichtung einschrauben lässt.

Das Schwenkteil 14 ist mit einem Schnellentlüftungsventil 24 ausgestattet, das in die Verbindung zwischen den drei Anschlüssen 12, 13, 15 eingeschaltet ist. Es ist ähnlich einem sogenannten Wechselventil aufgebaut. Als Ventilglied ist eine bewegliche Dichtmanschette 25 vorgesehen, die in das Schwenkteil 14 integriert ist.

Das Schwenkteil 14 enthält einen Schwenkteil-Grundkörper 26, der einen Ringkörper 27 aufweist, der koaxial auf das Befestigungsteil 7 aufgesteckt ist. Von dem Ringkörper 27 ragt ein Rohrstück 28 des Schwenkteil-Grundkörpers 26 quer zur Längsachse 32 des Befestigungsteiles 7 weg, in das vom freien Ende her ein den Speiseanschluss 15 aufweisender Speiseanschlusskörper 33 eingesetzt ist. Bevorzugt ist der Speiseanschlusskörper 33 in das Rohrstück 28 unter Abdichtung eingeschraubt.

Die Dichtmanschette 25 ist zwischen dem Schwenkteil-Grundkörper 26 und dem Speiseanschlusskörper 33 gefangen, wobei sie aber in Längsrichtung des Speiseanschlusskörpers 33 zwischen zwei Endstellungen bewegbar ist.

Die Dichtmanschette 25 sitzt in einem Aufnahmeraum 34, den sie in eine erste Kammer 35 und eine zweite Kammer 36 unterteilt. In die erste Kammer mündet ein mit dem Speiseanschluss 15 kommunizierender erster Fluidkanal 37. In die dem Befestigungsteil 7 zugeordnete zweite Kammer 36 mündet ein mit dem Arbeitsanschluss 12 kommunizierender zweiter Fluidkanal 38 sowie ein mit dem Entlüftungsanschluss 13 kommunizierender dritter Fluidkanal 39. Die beiden letztgenannten Fluidkanäle 38, 39 münden jeweils andernends stirnseitig am zugeordneten ersten bzw. zweiten Endbereich 8, 9 aus und enthalten jeweils einen zwischen dem Außenumfang des Befestigungsteils 7 und dem Innenumfang des Ringkörpers 27 definierten Ringkanal 42 bzw. 43, von dem ein in die erste Kammer 35 führender Zweigkanal 44 bzw. 45 des Schwenkteils 14 abgeht.

Die Dichtmanschette 25 enthält einen Zentralkörper 46, an dem eine umlaufende Dichtlippe 47 angeformt ist.

Wird über den Speiseanschluss 15 Druckluft eingespeist, verschiebt diese die Dichtmanschette 25, so dass der Zentralkörper 46 die Ausmündung des dritten Fluidkanals 39 verschließt. Gleichzeitig wird die Dichtlippe 47 nach innen verformt, so dass die Druckluft an der Dichtmanschette 25 vorbei in den zweiten Fluidkanal 38 und somit zum Arbeitsanschluss 12 strömen kann. Von dort tritt sie in die angeschlossene fluidtechnische Komponente 2 ein.

Um in der fluidtechnischen Komponente 2 befindliche Druckluft abströmen zu lassen, wird die Druckluftzufuhr über die Fluidleitung 18 zum Speiseanschluss 15 unterbrochen und am Speiseanschluss 15 zweckmäßigerweise atmosphärischer Druck angelegt. Hierzu kann ein nicht näher dargestelltes Ventil verwendet werden. Auf diese Weise ist die am Arbeitsanschluss 12 anstehende Druckluft in der Lage, die Dichtmanschette 25 bis zur Anlage am Speiseanschlusskörper 33 zurückzuschieben, wobei gleichzeitig die Dichtlippen 47 nach außen in dichtenden Kontakt mit dem Schwenkteil-Grundkörper 26 gedrückt werden. Die Druckluft kann nun vom Arbeitsanschluss 12 durch die erste Kammer 35 hindurch zum Entlüftungsanschluss 13 ausströmen.

Die Art und Weise, wie die Druckluft ausströmen soll variiert in Abhängigkeit von der Art der fluidtechnischen Komponente und den Einsatzbedingungen der Gesamtanordnung. Die Anschlussvorrichtung 1 gestattet es, durch die wahlweise Kombination der Basiseinheit 3 mit einer der zur Verfügung gestellten Entlüftungseinheiten 4 den jeweiligen Gegebenheiten optimal Rechnung zu tragen. Je nachdem, welche Entlüftungsart gewünscht ist, wird die entsprechende Entlüftungseinheit 4 mit ihrer zweiten Schnittstelle 6 an der am zweiten Endbereich 9 des Befestigungsteiles 7 vorgesehenen ersten Schnittstelle 5 befestigt.

Die Figur 3 zeigt die Anschlussvorrichtung 1 im mit der eingangs erwähnten ersten Entlüftungseinheit 4, 4a ausgestatteten Zustand. Diese erste Entlüftungseinheit 4, 4a ist mit einer Abluftdrossel 48 und mit einem Schalldämpfer 51 ausgestattet. Die vorzugsweise variabel einstellbare Abluftdrossel 48 ermöglicht eine Beeinflussung der Abströmgeschwindigkeit der Druckluft, was im Zusammenhang mit fluidbetätigten Antrieben insbesondere dazu verwendet wird, die Geschwindigkeit des Antriebsteiles, beispielsweise ein Kolben, zu beeinflussen. Durch den der Abluftdrossel 48 in Ausströmrichtung nachgeordneten Schalldämpfer 51 wird der Schall der austretenden Luft und somit das Betriebsgeräusch der Anschlussvorrichtung 1 gedämpft.

Die Figur 4 zeigt die Anschlussvorrichtung 1 im mit der zweiten Entlüftungseinheit 4, 4b ausgestatteten Zustand. Diese enthält keine Abluftdrossel 48 und ermöglicht ein uneingeschränktes Abströmen der Druckluft. Allerdings ist auch hier ein Schalldämpfer 51 zur Geräuschreduzierung vorgesehen.

Im Falle der Figur 5 schließlich ist die Anschlussvorrichtung 1 im mit der dritten Entlüftungseinheit 4, 4c ausgestatteten Zustand abgebildet. Wie bei der Bauform gemäß Figur 4 enthält die Entlüftungseinheit 4c keine Drosselmittel. Darüber hinaus ist aber auch kein Schalldämpfer vorhanden. Statt dessen ist ein Fluidleitungsanschluss 52 vorgesehen, an den sich eine strichpunktiert angedeutete weitere Fluidleitung 53 anschlie-ßen lässt, so dass die Abluft gefasst abgeführt werden kann und nicht im unmittelbaren Umgebungsbereich der Anschlussvorrichtung 1 ausströmt. Der Fluidleitungsanschluss 52 ist zweckmäßigerweise mit Steckanschlussmitteln 54 versehen, die unter Abdichtung eine lösbare Steckverbindung der weiteren Fluidleitung 53 ermöglichen.

Bevorzugt sind die erste und zweite Schnittstelle 5, 6 als Schraub-Schnittstellen ausgebildet. Sie ermöglichen eine Befestigung der jeweiligen Entlüftungseinheit 4 im Rahmen eines Schraubvorganges. Hierzu kann die erste Schnittstelle 5 in einer Erweiterung des dritten Fluidkanals 39 ein Innengewinde enthalten, in das die Entlüftungseinheit 4 mit einem ein Au-ßengewinde aufweisenden Befestigungsfortsatz 55 einschraubbar ist.

Der Befestigungsfortsatz 55 ist Bestandteil einer Hohlschraube 56 der betreffenden Entlüftungseinheit 4. Diese hat an dem dem Befestigungsfortsatz 55 entgegengesetzten Ende eine z.B. von einem Mehrkant gebildete Betätigungspartie 57, an der sich die Hohlschraube 56 handhaben lässt, wenn sie in das Befestigungsteil 7 eingeschraubt oder aus diesem herausgeschraubt wird.

In der Hohlschraube 56 befindet sich ein Entlüftungskanal 58. Dieser mündet einenends im Bereich der zweiten Schnittstelle 6 aus, so dass er bei installierter Entlüftungseinheit 4 mit dem dritten Fluidkanal 39 der Basiseinheit 3 in fluidischer Verbindung steht.

Andernends mündet der Entlüftungskanal 58 zum Außenumfang der Hohlschraube 56 aus, was über mehrere umfangsmäßig verteilte Zweigkanäle 59 geschehen kann.

Bei den Ausgestaltungen der Figuren 3 und 4 hat der Schalldämpfer 51 eine hülsenartige Gestalt. Er ist koaxial auf die Hohlschraube 56 aufgesteckt und auf Höhe der Ausmündungen der Zweigkanäle 59 platziert. Koaxial zwischen dem Schalldämpfer 51 und dem Außenumfang der Hohlschraube 56 befindet sich ein Ringraum 63, in dem sich die ausströmende Luft verteilen kann, bevor sie durch den Schalldämpfer 51 hindurchtritt.

Der Schalldämpfer 51 besteht aus an sich bekanntem Schalldämpfmaterial, beispielsweise ein Sintermaterial, und hat einen porösen Aufbau, der der Luft ein Hindurchströmen mit gleichzeitiger Geräuschminderung ermöglicht.

Im Falle der Figuren 4 und 5 sind die Hohlschrauben identisch ausgebildet. Insgesamt unterscheidet sich die bei der Anordnung gemäß Figur 5 verwendete dritte Entlüftungseinheit 4, 4c von der bei der Anordnung gemäß Figur 4 eingesetzten zweiten Entlüftungseinheit 4b nur dadurch, dass anstelle des Schalldämpfers 51 ein weiteres Schwenkteil 64 auf der Hohlschraube 56 drehbar angeordnet ist, das den Fluidleitungsanschluss 52 aufweist und das einen internen Fluidkanal 65 enthält, der den Fluidleitungsanschluss 52 mit dem Ringraum 63 verbindet.

Zwischen dem weiteren Schwenkteil 64 und der Hohlschraube 56 sind, axial beidseits des Ringraumes 63, Dichtungen 66 vorgesehen. Vergleichbare Dichtungen 67 befinden sich axial beidseits der beiden an der Basiseinheit 3 vorgesehenen Ringräume zwischen dem Befestigungsteil 7 und dem Schwenkteil 14.

Durch die beiden Schwenkteile 14, 64 ist es möglich, den Speiseanschluss 22 und den Fluidleitungsanschluss 52 durch Verdrehen unabhängig voneinander drehwinkelmäßig bezüglich der Längsachse 32 zu positionieren.

Die erste Entlüftungseinheit 4a gemäß Figur 3 unterscheidet sich von der zweiten Entlüftungseinheit 4b gemäß Figur 4 durch das zusätzliche Vorhandensein einer Abluftdrossel 48. Die Abluftdrossel 48 enthält zweckmäßigerweise ein die Betätigungspartie 57 koaxial durchsetzendes Drosselglied 68, das in den Entlüftungskanal 58 eintaucht. Das Drosselglied 68 ist relativ zur Hohlschraube 56 verstellbar und positionierbar, um unterschiedliche Eintauchtiefen und somit unterschiedliche Drosselungsintensitäten zu erhalten. Zum Einstellen ist das Drosselglied 68 am äußeren Ende mit einem Betätigungsabschnitt 69 versehen.

Zweckmäßigerweise ermöglichen die beiden Schnittstellen 5, 6 eine lösbare Befestigung der jeweiligen Entlüftungseinheit 4. Auf diese Weise ist zu jeder Zeit eine Umrüstung der Anschlussvorrichtung 1 auf einen anderen Typ von Entlüftungseinheit 4 möglich.

Der oben erwähnte Speiseanschlusskörper 33 ist an einer Schnittstelle 73 des Schwenkteil-Grundkörpers 26 montiert. Diese Schnittstelle 73 ermöglicht zweckmäßigerweise die wahlweise Befestigung von Speiseanschlusskörpern unterschiedlichen Typs. So können von Fall zu Fall wahlweise Speiseanschlusskörper montiert werden, die sich in der Ausgestaltung des Speiseanschlusses 15 unterscheiden. Dies ermöglicht beispielsweise die Installation von Speiseanschlüssen 15 mit unterschiedlichen Anschlussgrößen oder mit unterschiedlich gearteten Anschlussmitteln, beispielsweise in Gestalt von Steckanschlussmitteln 22 oder von Schraubanschlussmitteln 23. Auf diese Weise ergibt sich eine hohe Variabilität auch in Bezug auf die Anschlussmöglichkeiten für die die Druckluft zuführende Fluidleitung 18.

## Patentansprüche

1. Anschlussvorrichtung für Fluidleitungen,;
mit einer Basiseinheit (3), die ein längliches Befestigungsteil (7) mit einander entgegengesetzten ersten und zweiten Endbereichen (8, 9) aufweist, auf das ein Schwenkteil (14) drehbar aufgesteckt ist, das einen Speiseanschluss (15) aufweist, der zum Anschließen einer ein Druckmedium einspeisenden Fluidleitung (18) vorgesehen ist,
und mit einem am ersten Endbereich (8) des Befestigungsteiles (7) vorgesehenen Arbeitsanschluss (12) zum Verbinden mit einer fluidtechnischen Komponente (2) und einem am zweiten Endbereich (9) des Befestigungsteiles (7) vorgesehenen, eine erste Schnittstelle (5) aufweisenden Entlüftungsanschluss (13), wobei das Schwenkteil (14) mit einem in die Verbindung zwischen den drei Anschlüssen (12, 13, 15) eingeschalteten Schnellentlüftungsventil (24) ausgestattet ist, **dadurch gekennzeichnet, dass** die Anschlussvorrichtung (1) zusätzlich zu dem Befestigungsteil (7) mehrere jeweils von einem zur Luftabfuhr dienenden Entlüftungskanal (58) durchsetzte unterschiedliche Typen von Entlüftungseinheiten (4) aufweist, unter denen sich wenigstens eine Entlüftungseinheit (4a) mit Abluftdrossel (48) und wenigstens eine Entlüftungseinheit (4b, 4c) ohne Abluftdrossel befindet und die, zur wahlweisen Befestigung an der ersten Schnittstelle (5) des Entlüftungsanschlusses (13), jeweils mit einer zu der ersten Schnittstelle (5) komplementären zweiten Schnittstelle (6) versehen sind.

2. Anschlussvorrichtung nach Anspruch 1, **dadurch gekennzeichnet, dass** die dem Entlüftungsanschluss (13) zugeordnete erste Schnittstelle (5) eine Schraub-Schnittstelle ist.

3. Anschlussvorrichtung nach Anspruch 1 oder 2, **dadurch gekennzeichnet, dass** die ersten und zweiten Schnittstellen (5, 6) derart ausgebildet sind, daß sie eine lösbare Befestigung der Entlüftungseinheiten (4) am Basisteil (7) ermöglichen.

4. Anschlussvorrichtung nach einem der Ansprüche 1 bis 3, **dadurch gekennzeichnet, dass** mindestens eine der Entlüftungseinheiten (4, 4a, 4b) einen Schalldämpfer zur Dämpfung des Schalls der austretenden Luft enthält.

5. Anschlussvorrichtung nach einem der Ansprüche 1 bis 4, **dadurch gekennzeichnet, dass** mindestens eine der Entlüftungseinheiten (4, 4c) mit einem Fluidleitungsanschluss (52) versehen ist, der zum Anschließen einer zur gefassten Luftabfuhr dienenden Fluidleitung (53) vorgesehen ist.

6. Anschlussvorrichtung nach Anspruch 5, **dadurch gekennzeichnet, dass** der Fluidleitungsanschluss (52) mit Steckanschlussmitteln (54) ausgestattet ist.

7. Anschlussvorrichtung nach Anspruch 5 oder 6, **dadurch gekennzeichnet, dass** die zur gefassten Luftabfuhr dienende Entlüftungseinheit (4, 4c) eine mit der zweiten Schnittstelle (6) versehene Hohlschraube (56) und ein drehbar auf die Hohlschraube (56) aufgestecktes, den Fluidleitungsanschluss (52) aufweisendes Schwenkteil (64) enthält.

8. Anschlussvorrichtung nach einem der Ansprüche 1 bis 7, **dadurch gekennzeichnet, dass** sie drei wahlweise an der ersten Schnittstelle (5) anbringbare Entlüftungseinheiten (4a, 4b, 4c) aufweist, wobei eine erste Entlüftungseinheit (4a) mit einer Abluftdrossel (48) und einem Schalldämpfer (51) ausgestattet ist, eine zweite Entlüftungseinheit (4b) mit einem Schalldämpfer (51) und ohne Abluftdrossel ausgestattet ist und eine dritte Entlüftungseinheit (4c) mit einem der gefassten Luftabfuhr dienenden Fluidleitungsanschluss (52) und ohne Schalldämpfer und Abluftdrossel ausgestattet ist.

9. Anschlussvorrichtung nach einem der Ansprüche 1 bis 8, **dadurch gekennzeichnet, dass** dem Arbeitsanschluss (12) ein zur Schraubbefestigung der Anschlussvorrichtung (1) vorgesehenes Anschlussgewinde (16) zugeordnet ist.

10. Anschlussvorrichtung nach einem der Ansprüche 1 bis 9, **dadurch gekennzeichnet, dass** der Speiseanschluss (15) mit Steckanschlussmitteln (22) ausgestattet ist.

11. Anschlussvorrichtung nach einem der Ansprüche 1 bis 10, **dadurch gekennzeichnet, dass** der Speiseanschluss (15) mit Schraubanschlussmitteln (23) ausgestattet ist.

12. Anschlussvorrichtung nach einem der Ansprüche 1 bis 11, **dadurch gekennzeichnet, dass** das Schwenkteil (14) einen am Befestigungsteil (7) drehbar gelagerten Schwenkteil-Grundkörper (26) und einen den Speiseanschluss (15) aufweisenden, an dem Schwenkteil-Grundkörper (26) befestigten Speiseanschlusskörper (33) enthält.

13. Anschlussvorrichtung nach Anspruch 12, **dadurch gekennzeichnet, dass** das Schnellentlüftungsventil (24) eine Dichtmanschette (25) enthält, die zwischen dem Schwenkteil-Grundkörper (26) und dem Speiseanschlusskörper (33) beweglich gefangen ist.

14. Anschlussvorrichtung nach einem der Ansprüche 1 bis 13, **gekennzeichnet durch** mehrere unterschiedliche Typen von Speiseanschlusskörpern (33).

15. Anschlussvorrichtung nach Anspruch 13 oder 14, **gekennzeichnet durch** eine an dem Schwenkteil-Grundkörper (26) vorgesehene Schnittstelle (73) zur wahlweisen Befestigung von Speiseanschlusskörpern (33) unterschiedlichen Typs, unter denen sich zweckmäßigerweise mindestens ein mit Steckanschlussmitteln (22) ausgestatteter Speiseanschlusskörper (33) und mindestens ein mit Schraubanschlussmitteln (23) ausgestatteter Speiseanschlusskörper (33) befindet.

## Claims

1. Connection device for fluid lines, with a base unit (3) which has an elongated mounting part (7) with opposing first and second end sections (8, 9), on which is rotatably mounted a swivel part (14) with a feed connection (15) provided for the connection of a fluid line (18) supplying a pressure medium,
and with an operating connection (12) provided at the first end section (8) of the mounting part (7) for the connection of a fluidic component (2), and a vent connection (13) with a first interface (5), provided on the second end section (9) of the mounting part (7), wherein the swivel part (14) is equipped with a quick-exhaust valve (24) connected between the three connections (12, 13, 15), **characterised in that** the connection device (1), in addition to the mounting part (7), has several different types of venting unit (4) containing a vent passage (58) providing for air discharge and including at least one venting unit (4a) with exhaust restrictor (48) and at least one venting unit (4b, 4c) without exhaust restrictor (48) and which, for alternative mounting on the first interface (5) of the vent connection (13), are each provided with a second interface (6) complementary to the first interface (5).

2. Connection device according to claim 1, **characterised in that** the first interface (5) assigned to the vent connection (13) is a screw interface.

3. Connection device according to claims 1 or 2, **characterised in that** the first and second interfaces (5, 6) are so designed that they allow releasable mounting of the venting units (4) on the mounting part (7).

4. Connection device according to any of claims 1 to 3, **characterised in that** one or more of the venting units (4, 4a, 4b) contains a silencer for damping the sound of the outgoing air.

5. Connection device according to any of claims 1 to 4, **characterised in that** one or more of the venting units (4, 4c) is provided with a fluid line connection (52) for connecting a fluid line (53) used for the contained air discharge.

6. Connection device according to claim 5, **characterised in that** the fluid line connection (52) is equipped with plug connection means (54).

7. Connection device according to claims 5 or 6, **characterised in that** the venting unit (4, 4c) used for the contained air discharge contains a hollow bolt (56) provided with the second interface (6) and a swivel part (64) provided with the fluid line connection (52) and fitted rotatably on to the hollow bolt (56).

8. Connection device according to any of claims 1 to 7, **characterised in that** it has three venting units (4a, 4b, 4c) which may be attached alternately to the first interface (5), wherein a first venting unit (4a) is equipped with an exhaust restrictor (48) and a silencer (51), a second venting unit (4b) is equipped with a silencer (51) but has no exhaust restrictor, and a third venting unit (4c) is equipped with a fluid line connection (52) for the contained air discharge, but has no silencer and no exhaust restrictor.

9. Connection device according to any of claims 1 to 8, **characterised in that** the operating connection (12) is assigned a connection thread (16) provided for the screw fastening of the connection device (1).

10. Connection device according to any of claims 1 to 9, **characterised in that** the feed connection (15) is equipped with plug connection means (22).

11. Connection device according to any of claims 1 to 10, **characterised in that** the feed connection (15) is equipped with screw connection means (23).

12. Connection device according to any of claims 1 to 11, **characterised in that** the swivel part (14) contains a swivel part body (26) mounted rotatably on the mounting part (7), and a feed connection body (33) which has the feed connection (15) and is mounted on the swivel part body (26).

13. Connection device according to claim 12, **characterised in that** the quick-exhaust valve (24) contains a seal collar (25), held movably between the swivel part body (26) and the feed connection body (33).

14. Connection device according to any of claims 1 to 13, **characterised by** several different types of feed connection bodies (33).

15. Connection device according to claim 13 or 14, **characterised by** an interface (73) provided on the swivel part body (26) for alternative mounting of different types of feed connection bodies (33), expediently including at least one feed connection body (33) equipped with plug connection means (22) and at least one feed connection body (33) equipped with screw connection means (23).

## Revendications

1. Dispositif de raccordement pour des conduites de fluide,
comportant une unité de base (3), qui comporte un élément de fixation (7) allongé avec une première et une deuxième zone d'extrémité (8, 9) opposées l'une à l'autre et sur lequel est emmanché de manière rotative un élément pivotant (14) qui comporte un raccord d'alimentation (15), qui est prévu pour le branchement d'une conduite de fluide (18) amenant un fluide sous pression,
et comportant un raccord de travail (12), qui est prévu sur la première zone d'extrémité (8) de l'élément de fixation (7) et qui est destiné à être relié à un composant (2) d'un système fluidique, et un raccord de purge d'air (13), prévu sur la deuxième zone d'extrémité (9) de l'élément de fixation (7) et muni d'une première interface (5), l'élément pivotant (14) étant muni d'une soupape d'échappement rapide (24) montée dans la liaison entre les trois raccords (12, 13, 15),
**caractérisé en ce que** le dispositif de raccordement (1), en plus de l'élément de fixation (7), comporte plusieurs unités de purge d'air (4) de types différents, qui sont traversées chacune par un canal d'échappement d'air (58) destiné à l'évacuation de l'air et parmi lesquelles il est prévu au moins une unité de purge d'air (4a) avec un clapet d'évacuation d'air (48) et au moins une unité de purge d'air (4b, 4c) sans clapet d'évacuation d'air et lesquelles, pour une fixation au choix à la première interface (5) du raccord de purge d'air (13), sont munies chacune d'une deuxième interface (6) complémentaire à la première interface (5).

2. Dispositif de raccordement selon la revendication 1, **caractérisé en ce que** la première interface (5) associée au raccord de purge d'air (13) est une interface à vis.

3. Dispositif de raccordement selon la revendication 1 ou 2, **caractérisé en ce que** la première et la deuxième interface (5, 6) sont conçues de telle sorte qu'elles permettent une fixation amovible des unités de purge d'air (4) sur l'élément de base (7).

4. Dispositif de raccordement selon l'une quelconque des revendications 1 à 3, **caractérisé en ce qu'**au moins une des unités de purge d'air (4, 4a, 4b) contient un amortisseur de bruit pour atténuer le bruit de l'air sortant.

5. Dispositif de raccordement selon l'une quelconque des revendications 1 à 4, **caractérisé en ce qu'**au moins une des unités de purge d'air (4, 4c) est munie d'un raccord pour conduite de fluide (52), qui est prévu pour le branchement d'une conduite de fluide (53) destinée à l'évacuation de l'air capté.

6. Dispositif de raccordement selon la revendication 5, **caractérisé en ce que** le raccord pour conduite de fluide (52) est muni de moyens de raccordement par enfichage (54).

7. Dispositif de raccordement selon la revendication 5 ou 6, **caractérisé en ce que** l'unité de purge d'air (4, 4c) par l'évacuation de l'air capté, comporte une vis creuse (56) munie de la deuxième interface (6) et un élément pivotant (64) emmanché de manière rotative sur la vis creuse (56) et muni du raccord pour conduite de fluide (52).

8. Dispositif de raccordement selon l'une quelconque des revendications 1 à 7, **caractérisé en ce qu'**il comporte trois unités de purge d'air (4a, 4b, 4c), pouvant être montées au choix sur la première interface (5), une première unité de purge d'air (4a) étant réalisée avec un clapet d'échappement d'air (48) et un amortisseur de bruit (51), une deuxième unité de purge d'air (4b) étant réalisée avec un amortisseur de bruit (51) et sans clapet d'échappement d'air, et une troisième unité de purge d'air (4c) étant réalisée avec un raccord pour conduite de fluide (52), destiné à évacuer l'air capté, et sans amortisseur de bruit et sans clapet d'échappement d'air.

9. Dispositif de raccordement selon l'une quelconque des revendications 1 à 8, **caractérisé en ce qu'**un filetage de raccordement (16), prévu pour la fixation filetée du dispositif de raccordement (1), est associé au raccord de travail (12).

10. Dispositif de raccordement selon l'une quelconque des revendications 1 à 9, **caractérisé en ce que** le raccord d'alimentation (15) est muni de moyens de raccordement par enfichage (22).

11. Dispositif de raccordement selon l'une quelconque des revendications 1 à 10, **caractérisé en ce que** le raccord d'alimentation (15) est muni de moyens de raccordement par vissage (23).

12. Dispositif de raccordement selon l'une quelconque des revendications 1 à 11, **caractérisé en ce que** l'élément pivotant (14) comporte un corps de base (26) monté rotatif sur l'élément de fixation (7) et un corps de raccord d'alimentation (33), comportant le raccord d'alimentation (15) et fixé sur le corps de base (26).

13. Dispositif de raccordement selon la revendication 12, **caractérisé en ce que** la soupape d'échappement rapide (24) comporte une manchette d'étanchéité (25), qui est insérée mobile entre le corps de base (26) et le corps de raccord d'alimentation (33).

14. Dispositif de raccordement selon l'une quelconque des revendications 1 à 13, **caractérisé par** plusieurs corps de raccord d'alimentation (33) de types différents.

15. Dispositif de raccordement selon la revendication 13 ou 14, **caractérisé par** une interface (73) prévue sur le corps de base (26) pour la fixation au choix de corps de raccord d'alimentation (33) de types différents, parmi lesquels, de manière judicieuse, au moins un corps de raccord d'alimentation (33) est muni de moyens de raccordement par enfichage (22) et au moins un corps de raccord d'alimentation (33) est muni de moyens de raccordement par vissage (23).
